Europäisches Patentamt

**European Patent Office**

**Office européen des brevets**

(19)

(11) Numéro de publication : **0 140 759 B1**

(12)

# FASCICULE DE BREVET EUROPÉEN

(45) Date de publication du fascicule du brevet :
02.12.87

(21) Numéro de dépôt : **84401944.8**

(22) Date de dépôt : **28.09.84**

(51) Int. Cl.⁴ : **B 60 G 17/00**, B 60 G 17/04

(54) **Correcteur de hauteur électrohydraulique pour véhicule automobile.**

(30) Priorité : **04.10.83 FR 8316098**

(43) Date de publication de la demande :
**08.05.85 Bulletin 85/19**

(45) Mention de la délivrance du brevet :
**02.12.87 Bulletin 87/49**

(84) Etats contractants désignés :
**DE GB IT**

(56) Documents cités :
**FR-A- 2 199 388
FR-A- 2 467 720
GB-A- 963 278
US-A- 2 991 804
US-A- 3 871 679
US-A- 4 293 139
J. P. de Groote: "Technolgie de l'hydraulique", pages
141-142, edité par E.T.A.I. Boulogne Billancourt (FR).
Troisième edition**

(73) Titulaire : **AUTOMOBILES CITROEN
62 Boulevard Victor-Hugo
F-92200 Neuilly-sur-Seine (FR)**

**AUTOMOBILES PEUGEOT
75, avenue de la Grande Armée
F-75116 Paris (FR)**

(72) Inventeur : **Dessirieix, Joel André
18, Allée de la Grange de Malassis
Chevry F-91190 Gif sur Yvette (FR)**

(74) Mandataire : **Boivin, Claude
9, rue Edouard-Charton
F-78000 Versailles (FR)**

## Description

La présente invention concerne un correcteur de hauteur électrohydraulique pour véhicule, propre à corriger la hauteur de la partie suspendue de ce véhicule en agissant sur des vérins de suspension.

Les correcteurs de hauteur de ce genre comprennent en général un distributeur hydraulique comportant un raccord d'admission de fluide relié à une pompe, un raccord d'échappement de fluide relié à un réservoir, et un raccord d'utilisation relié à des vérins de suspension, des moyens sensibles à la position de la partie suspendue du véhicule par rapport à la partie non suspendue, et des moyens commandés par ces moyens sensibles pour agir sur la circulation du fluide dans le distributeur. Un correcteur de hauteur de ce genre est décrit dans le document US-A-4,293,139 mais dans ce distributeur le tiroir est du type coulissant et son déplacement est sous la dépendance d'électro-aimants.

Le brevet FR-A-2 199 388 décrit un distributeur hydraulique à tiroir rotatif comprenant un corps dans lequel est monté pivotant le tiroir de distribution, celui-ci pouvant occuper trois positions actives différentes. La présente invention a pour objet un correcteur de hauteur dans lequel le distributeur est du type ci-dessus, à tiroir rotatif, et qui est beaucoup plus sensible et précis.

Ce correcteur de hauteur est caractérisé en ce que l'une des extrémités du tiroir pivotant est solidaire de l'arbre d'un micromoteur électrique à deux sens de rotation, et en ce que le correcteur de hauteur comprend un premier potentiomètre dont l'organe de réglage a sa position liée à la position de la partie suspendue du véhicule, un second potentiomètre dont l'organe de réglage est solidaire de l'autre extrémité du tiroir, et des moyens pour comparer les signaux émis par les deux potentiomètres et émettre un signal fonction de l'écart entre les deux premiers signaux et appliqué au micromoteur.

Le corps du distributeur et son tiroir sont de préférence agencés pour que le raccord d'utilisation ne soit mis en communication avec le raccord d'admission ou le raccord d'échappement que lorsque le tiroir a pivoté d'un angle notable à partir de sa position neutre.

Le tiroir de distribution peut par exemple comporter une gorge disposée en regard du raccord d'utilisation et dans laquelle débouche une rainure longitudinale qui, lorsque le tiroir pivote depuis sa position neutre, vient progressivement en regard d'un perçage du raccord d'admission ou du raccord d'échappement, suivant le sens de pivotement du tiroir.

Le tiroir peut comporter un méplat mobile devant des perçages des raccords d'admission et d'échappement et permettant soit d'isoler ces deux raccords l'un de l'autre, soit de les mettre en communication l'un avec l'autre.

Le méplat est avantageusement disposé de manière à relier un perçage du raccord d'admission et un perçage du raccord d'échappement quand le raccord d'utilisation est isolé ou relié au raccord d'échappement et à interrompre la liaison entre ces deux perçages quand le raccord d'utilisation est relié au raccord d'admission. On a décrit ci-après, à titre d'exemple non limitatif, un mode de réalisation du correcteur de hauteur selon l'invention avec référence aux dessins annexés dans lesquels :

La Figure 1 est une vue en coupe axiale du distributeur du correcteur ;

La Figure 2 en est une vue selon II-II de la Figure 1 ;

La Figure 3 en est une vue selon III-III de la Figure 1 ;

La Figure 4 est un schéma du correcteur ;

La Figure 5 est une vue en élévation du corps du distributeur ;

Les Figures 6 à 8 sont des vues en coupe transversale du distributeur respectivement suivant VI-VI, VII-VII et VIII-VIII de la Figure 5 ;

La Figure 9 est une vue en élévation du tiroir du distributeur ;

La Figure 10 en est une coupe longitudinale suivant X-X de la Figure 9 ;

Les Figures 11a à 11c montrent schématiquement le distributeur, en coupe axiale respectivement en position neutre, en position d'admission et en position d'échappement ;

Les Figures 12a à 12c sont des coupes suivant XII-XII de la Figure 9 respectivement des Figures 11a à 11c ;

Les Figures 13a à 13c sont des vues en coupe suivant XIII-XIII de la Figure 9 respectivement des Figures 11a à 11c ;

Les Figures 14a à 14c sont des vues en coupe suivant XIV-XIV de la Figure 9 respectivement des Figures 11a à 11c ;

Les Figures 15a et 15b sont des vues en coupe du distributeur, le tiroir étant à la limite respectivement de sa position d'admission et de sa position d'échappement.

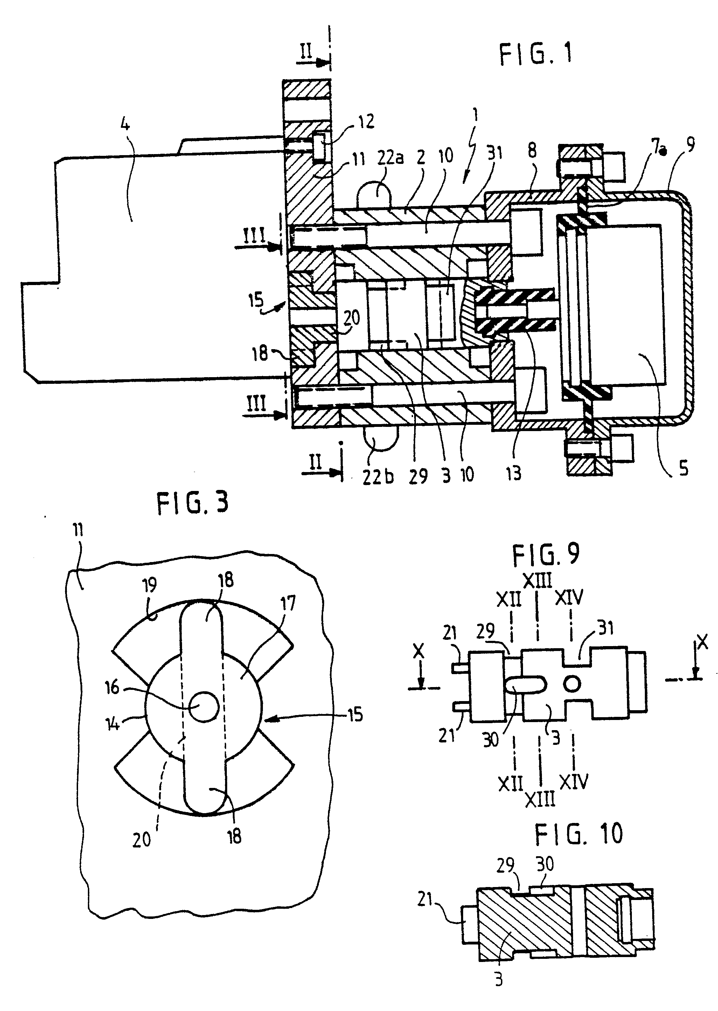

Tel qu'il est représenté au dessin, le correcteur de hauteur selon l'invention comprend un distributeur qui est désigné à la Figure 1 d'une façon générale par la référence 1 et comporte un corps 2 et un tiroir rotatif 3. Celui-ci est relié d'une part à un micromoteur 4 propre à faire pivoter le tiroir dans un sens ou dans l'autre suivant la polarité du signal qu'il reçoit, et d'autre part à un potentiomètre 5.

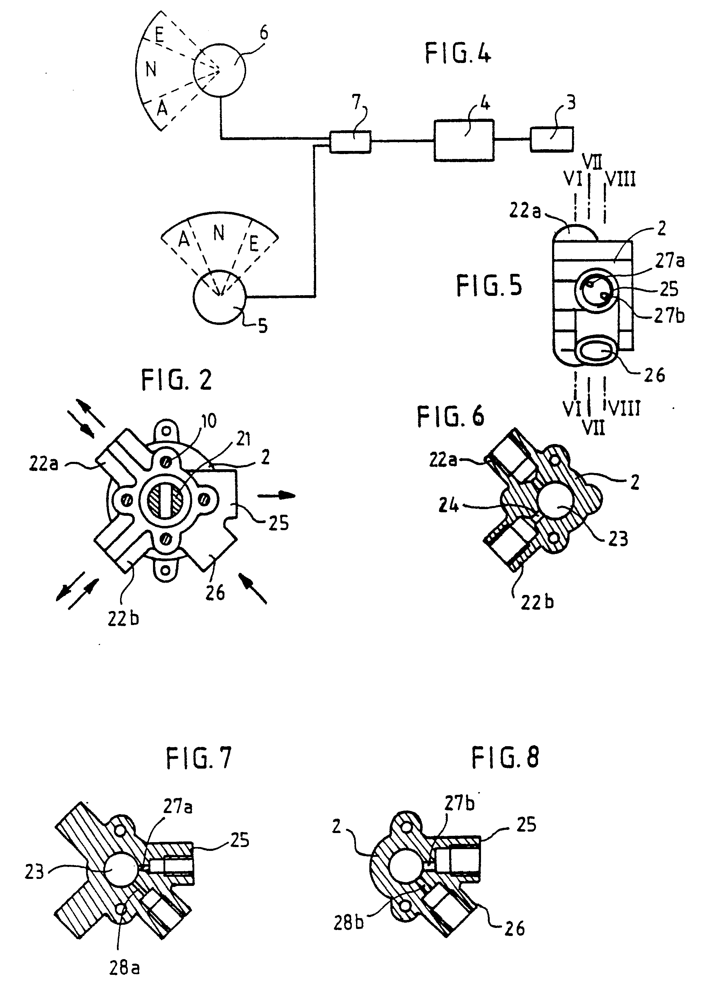

La position du curseur d'un deuxième potentiomètre 6 est liée à la hauteur de la partie supérieure du véhicule. Les deux potentiomètres 5 et 6 sont connectés à un boîtier électronique 7 qui amplifie l'écart entre les signaux provenant des potentiomètres 5 et 6 et fournit un signal appliqué au moteur 4 de manière à faire tourner le tiroir 3 dans le sens correspondant à la correction du défaut (voir Figure 4).

Le potentiomètre 5 est fixé par une membrane élastique 7a dans un carter 8 fermé par un couvercle 9. Des vis 10 solidarisent le carter 8 et le corps 2 à une plaque de raccordement 11 qui est fixée au moteur 4 par des vis 12. L'axe du potentiomètre 5 est relié au tiroir 3 par un raccord 13 en matière élastique.

La plaque 11 comporte un évidement 14 dans lequel est monté pivotant un entraîneur 15 reliant l'arbre 16 du moteur 4 au tiroir 3. Cet entraîneur comprend un moyeu 17 qui est fixé sur l'arbre 16 et prolongé latéralement par deux appendices 18 mobiles dans des prolongements latéraux 19 en forme de secteurs de l'évidement 14. Les parois de ces prolongements 19 limitent le pivotement de l'entraîneur à environ 45° de part et d'autre de la position neutre représentée à la Figure 3. Par ailleurs, le moyeu 17 est prolongé axialement par une portion méplate 20 logée entre deux appendices 21 du tiroir 3, de manière à solidariser en rotation ce tiroir et l'entraîneur.

Le corps 2 comporte deux raccords 22a et 22b qui sont écartés angulairement l'un de l'autre et communiquent avec le perçage central 23 du corps par des perçages radiaux 24 ; ils sont destinés à être reliés aux vérins de suspension. Le corps 2 comporte également deux raccords 25 et 26 qui sont écartés angulairement l'un de l'autre et légèrement décalés axialement par rapport aux raccords 22a et 22b ; ils sont destinés à être reliés respectivement avec l'échappement et l'admission. Le raccord 25 communique avec le perçage 23 par deux perçages 27a et 27b décalés axialement l'un par rapport à l'autre alors que le raccord 26 communique avec le perçage 23 par deux perçages 28a et 28b respectivement situés dans le plan des perçages 27a et 27b.

Le tiroir comporte une gorge annulaire 29 située dans le même plan que les raccords 22a et 22b et dans laquelle débouche une rainure longitudinale 30 ; l'extrémité de cette rainure opposée à la gorge 29 se trouve dans le plan des perçages 27a et 28a. Il comporte également un méplat 31 délimitant une chambre 32 et qui s'étend en regard des perçages 27b et 28b. Dans l'exemple représenté, le tiroir comporte en fait deux rainures 30 et deux méplats 31 diamétralement opposés dans le but de faciliter le montage.

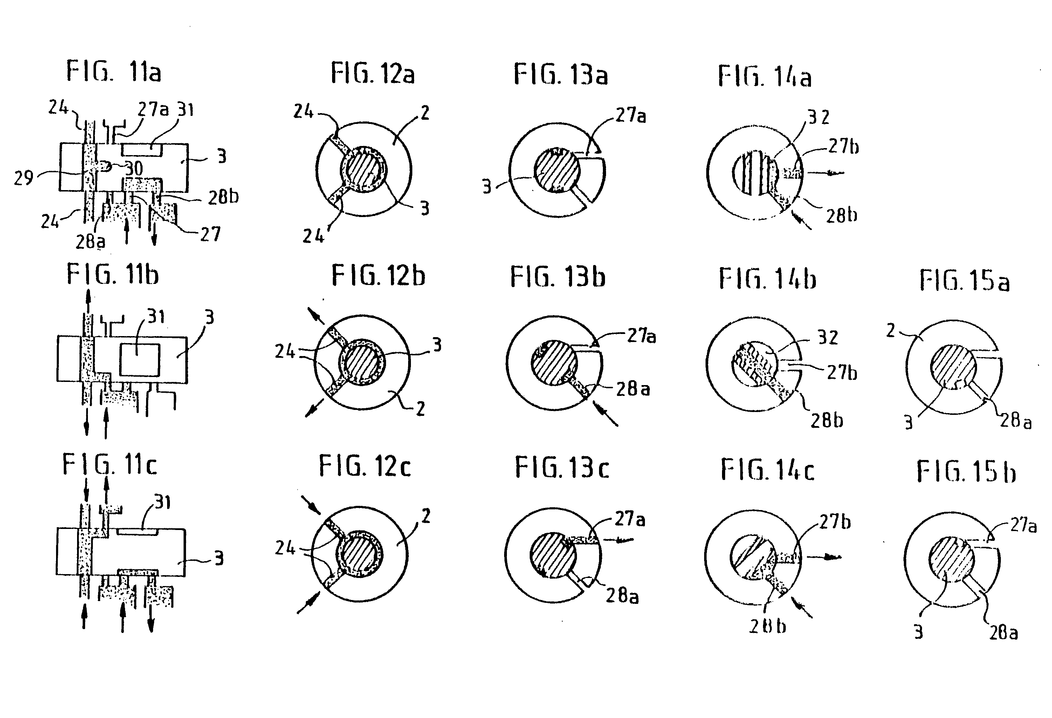

Le fonctionnement du tiroir 3 apparaît aux figures 11a à 14c. Lorsque le tiroir 3 occupe sa position médiane ou neutre représentée à la Figure 4 et aux Figures 11a à 14a, les deux perçages 24 des raccords d'utilisation 22a et 22b communiquent l'un avec l'autre par l'intermédiaire de la gorge 29 et sont isolés aussi bien de l'admission que de l'échappement. Par ailleurs, la chambre 32 délimitée par le méplat 31 relie les perçages 27b et 28b c'est-à-dire l'admission à l'échappement, pour éviter de détériorer la pompe. Lorsque le tiroir a pivoté d'environ 45° dans le sens des aiguilles d'une montre (Figures 11b à 14b), les perçages 24 sont en communication avec le perçage 28a par la rainure 30. L'utilisation est en communication avec l'admission ; l'échappement est isolé. Inversement, quand le tiroir a pivoté de 45° dans le sens contraire à celui des aiguilles d'une montre (Figures 11c à 14c), les perçages 24 sont en communication avec le perçage 27a ; l'utilisation est en communication avec l'échappement. En même temps, le perçage 27b est relié au perçage 28b par la chambre 32, de sorte que l'admission est également reliée à l'échappement.

Lorsque la partie suspendue du véhicule évolue autour de sa position moyenne, c'est-à-dire tant que le tiroir n'a pas atteint la position de la Figure 15a ou celle de la Figure 15b, le tiroir rotatif 3 reste en position neutre. Les vérins sont isolés et la hauteur de la partie suspendue du véhicule n'est pas modifiée. Si la hauteur de la partie suspendue du véhicule devient insuffisante, le signal lu et amplifié par le boîtier électronique 7 fait suffisamment pivoter le micromoteur 4, donc le tiroir 3 (Figure 15a), pour que les vérins de suspension soient progressivement reliés à la pompe, ce qui a pour effet de remonter la partie suspendue.

Inversement, si la hauteur de la partie suspendue est excessive, et que le tiroir atteint la position de la Figure 15b, les vérins de suspension sont progressivement reliés à l'échappement, ce qui a pour effet de rabaisser cette partie suspendue.

**Revendications**

1. Correcteur de hauteur électrohydraulique pour véhicule comprenant un distributeur hydraulique (1) à tiroir rotatif constitué d'un corps (2) qui est muni d'un raccord d'admission de fluide (26) relié à une pompe, d'un raccord d'échappement (25) relié à un réservoir et d'un raccord d'utilisation (22a ou 22b) relié à des vérins de suspension et dans lequel est monté pivotant le tiroir de distribution (3), celui-ci pouvant occuper trois positions actives différentes, des moyens (6) sensibles à la position de la partie suspendue du véhicule par rapport à la partie non suspendue, et des moyens (4) commandés par les moyens sensibles pour agir sur la circulation du fluide dans le distributeur, caractérisé en ce que l'une des extrémités du tiroir pivotant est solidaire de l'arbre d'un micromoteur électrique (4) à deux sens de rotation, et en ce que ledit correcteur de hauteur comprend un premier potentiomètre (6) dont l'organe de réglage a sa position liée à la position de la partie suspendue du véhicule, un second potentiomètre (5) dont l'organe de réglage est solidaire de l'autre extrémité du tiroir (3), et des moyens (7) pour comparer les signaux émis par les deux potentiomètres et émettre un signal fonction de l'écart entre les deux premiers signaux et appliqué au micromoteur (4).

2. Correcteur de hauteur selon la revendication 1, caractérisé en ce que le corps (2) du distributeur et son tiroir (3) sont agencés pour que le raccord d'utilisation (22a ou 22b) ne soit mis en communication avec le raccord d'admission (26) ou le raccord d'échappement (25) que lorsque le tiroir (3) a pivoté d'un angle notable à partir de sa position neutre.

3. Correcteur de hauteur selon l'une des revendications précédentes, caractérisé en ce que le tiroir (3) du distributeur comporte une gorge (29) disposée en regard du raccord d'utilisation et dans laquelle débouche une rainure longitudinale (30) qui, lorsque le tiroir pivote depuis sa position neutre, vient progressivement en regard d'un perçage du raccord d'admission ou du raccord d'échappement, suivant le sens de pivotement du tiroir.

4. Correcteur de hauteur selon l'une quelconque des revendications précédentes, caractérisé en ce que le tiroir (3) comporte un méplat (31) mobile devant des perçages des raccords d'admission et d'échappement et permettant soit d'isoler ces deux raccords l'un de l'autre, soit de les mettre en communication l'un avec l'autre.

5. Correcteur de hauteur selon la revendication 4, caractérisé en ce que le méplat (31) est disposé de manière à relier un perçage du raccord d'admission et un perçage du raccord d'échappement quand le raccord d'utilisation est isolé ou relié au raccord d'échappement et à interrompre la liaison entre ces deux perçages quand le raccord d'utilisation est relié au raccord d'admission.

6. Correcteur de hauteur selon l'une des revendications 1 à 5, caractérisé en ce que le raccord d'échappement (25) comporte deux perçages (27a et 27b) débouchant dans le perçage central (23) du corps et décalés l'un par rapport à l'autre dans la direction de l'axe du corps alors que le raccord d'admission (26) comporte deux perçages (28a et 28b) situés respectivement dans les plans des perçages (27a et 27b).

**Claims**

1. Electrohydraulic height corrector for vehicles comprising a hydraulic distributor (1) with rotary spool formed of a body (2) which is provided with a fluid intake connection (26) connected to a pump, an exhaust connection (25) connected to a reservoir and a user connection (22a or 22b) connected to suspension cylinders and in which the distribution spool (3) is pivotally mounted, this latter being able to occupy three different active positions, means (6) responsive to the position of the suspended part of the vehicle with respect to the non suspended part, and means (4) controlled by the responsive means for acting on the flow of fluid through the distributor, characterized in that one end of the pivoting spool is fixed to the shaft of an electric micromotor (4) with two rotational directions, and in that said height corrector comprises a first potentiometer (6) whose adjustment member has its position related to the position of the suspended part of the vehicle, a second potentiometer (5) whose adjustment member is fixed to the other end of the spool (3), and means (7) for comparing the signals emitted by the two potentiometers and for emitting a signal which is a function of the difference between the first two signals and is applied to the micromotor (4).

2. Height corrector according to claim 1, characterized in that the body (2) of the distributor and its spool (3) are adapted so that the user connection (22a or 22b) is only placed in communication with the intake connection (26) or the exhaust connection (5) when the spool (3) has pivoted through an appreciable angle from its neutral position.

3. Height corrector according to one of the preceding claims, characterized in that the spool (3) of the distributor has a groove (29) disposed opposite the user connection and into which opens a longitudinal groove (30) which, when the spool pivots from its neutral position, comes gradually opposite a bore in the admission connection or the exhaust connection, depending on the pivoting direction of the spool.

4. Height corrector according to any one of the preceding claims, characterized in that the spool (3) has a flat (31) movable in front of the bores of the intake and exhaust connections and allowing either these two connections to be isolated from each other, or to be placed in communication with each other.

5. Height corrector according to claim 4, characterized in that the flat (31) is disposed so as to connect a bore of the intake connection and a bore of the exhaust connection together when the user connection is isolated or connected to the exhaust connection and to interrupt the connection between these two bores when the user connector is connected to the intake connection.

6. Height corrector according to one of claims 1 to 5, characterized in that the exhaust connection (25) has two bores (27a and 27b) opening into the central bore (23) of the body and offset with respect to each other in the direction of the axis of the body whereas the intake connection (26) has two bores (28a and 28b) situated respectively in the plane of bores (27a and 27b).

**Patentansprüche**

1. Elektrohydraulische Niveauregelvorrichtung für ein Fahrzeug mit einem einen drehbaren Steuerschieber aufweisenden hydraulischen Verteiler (1), der einen Grundkörper (2) besitzt, welcher mit einem an eine Pumpe angeschlossenen Zuführungsanschlußstutzen (26) für Flüssigkeit, einem mit einem Sammelbehälter verbundenen Abführungsanschlußstutzen (25) und einem mit Aufhängewinden verbundenen Arbeitsanschlußstutzen (22a oder 22b) versehen ist und in dem der verteilende Steuerschieber (3) drehbar angeordnet ist, der drei verschiedene aktive Stellungen einnehmen kann, und mit Mitteln (6), welche auf die Lage des aufgehängten Fahrzeugteils in Bezug auf den nicht aufgehängten Fahrzeugteil ansprechen, und von den ansprechenden Mitteln gesteuerte Mittel (4) zur Einwirkung auf die Zirkulation der Flüssigkeit im Verteiler, dadurch gekennzeichnet, daß eines der Enden des drehbaren Steuerschiebers kraftschlüssig mit der Welle eines elektrischen Mikromotors (4) mit zwei Drehrichtungen verbunden ist, und daß die besagte Niveauregelvorrichtung ein erstes Potentiometer (6) aufweist, dessen Stellglied in seiner Einstellung an die Lage des aufgehängten Fahrzeugteils gebunden ist, sowie ein zweites Potentiometer (5), dessen Stellglied kraftschlüssig mit dem anderen Ende des Steuerschiebers (3) verbunden ist und Mittel (7) zum Vergleichen der von den beiden Potentiometern abgegebenen Signale und zur Abgabe eines Signals, das eine Funktion der Abweichung der beiden ersten Signale voneinander ist und dem Mikromotor (4) zugeführt wird.

2. Niveauregelvorrichtung nach Anspruch 1, dadurch gekennzeichnet, daß der Grundkörper (2) des Verteilers und sein Steuerschieber (3) so angeordnet sind, daß der Arbeitsanschlußstutzen (22a oder 22b) mit dem Zuführungsanschlußstutzen (26) oder dem Abführungsanschlußstutzen (25) nur dann in Verbindung gesetzt wird, wenn der Steuerschieber (3) sich aus seiner neutralen Stellung um einen bedeutenden Winkel herausgedreht hat.

3. Niveauregelvorrichtung nach einem der vorhergehenden Ansprüche, dadurch gekennzeichnet, daß der Steuerschieber (3) des Verteilers eine gegenüber dem Arbeitsanschlußstutzen angeordnete Nut (29) aufweist, in die eine in Längsrichtung verlaufende Nut (30) einmündet, die, wenn sich der Steuerschieber aus seiner neutralen Stellung herausdreht, fortschreitend in eine Stellung gegenüber einer Bohrung im Zuführungsanschlußstutzen oder im Abführungsanschlußstutzen gelangt, je nach der Drehrichtung des Steuerschiebers.

4. Niveauregelvorrichtung nach einem der vorhergehenden Ansprüche, dadurch gekennzeichnet, daß der Steuerschieber (3) ein vor den Bohrungen des Zuführungsanschlußstutzens und des Abführungsanschlußstutzens angeordnetes, bewegbares Halbflach (31) aufweist, welches entweder die Trennung dieser beiden Anschlußstutzen voneinander oder ihre Verbindung miteinander bewirkt.

5. Niveauregelvorrichtung nach Anspruch 4, dadurch gekennzeichnet, daß das Halbflach (31) so angeordnet ist, daß es eine Verbindung zwischen einer Bohrung des Zuführungsanschlußstutzens und einer Bohrung des Abführungsanschlußstutzens herstellt, wenn der Arbeitsanschlußstutzen abgetrennt oder mit dem Abführungsanschlußstutzen verbunden ist, und es die Verbindung zwischen diesen beiden Bohrungen unterbricht, wenn der Arbeitsanschlußstutzen mit dem Zuführungsanschlußstutzen verbunden ist.

6. Niveauregelvorrichtung nach einem der Ansprüche 1 bis 5, dadurch gekennzeichnet, daß der Abführungsanschlußstutzen (25) zwei Bohrungen (27a und 27b) aufweist, welche in die zentrale Bohrung (23) des Grundkörpers einmünden und in Richtung der Achse des Grundkörpers gegeneinander versetzt angeordnet sind, während der Zuführungsanschlußstutzen (26) zwei Bohrungen (28a und 28b) aufweist, die jeweils in den Ebenen der Bohrungen (27a und 27b) des Abführungsanschlußstutzens liegen.

FIG. 1

FIG. 3

FIG. 9

FIG. 10

FIG.4

FIG.5

FIG. 2

FIG. 6

FIG.7

FIG.8

FIG. 11a

FIG. 12a

FIG. 13a

FIG. 14a

FIG. 11b

FIG. 12b

FIG. 13b

FIG. 14b

FIG. 15a

FIG. 11c

FIG. 12c

FIG. 13c

FIG. 14c

FIG. 15b

0 140 759